# EUROPÄISCHE PATENTSCHRIFT

(11) **EP 1 176 001 B1**
(45) Veröffentlichungstag und Bekanntmachung des Hinweises auf die Patenterteilung: **28.12.2005**
(21) Anmeldenummer: 01117611.2
(22) Anmeldetag: 23.07.2001
(51) Int. Cl.: B32B 21/12, E04G 9/04

(54) **Mehrlagige hölzerne Verbundplatte**
Multilayered wooden composite panel
Panneau multicouche en bois

(30) Priorität: 24.07.2000 DE 10036034
(43) Veröffentlichungstag der Anmeldung: 30.01.2002
(73) Patentinhaber: IHD Institut für Holztechnologie Dresden gGmbH, 01217 Dresden (DE)
(72) Erfinder: Tobisch, Steffen, 01219 Dresden (DE); Krug, Detlef, 01277 Dresden (DE)
(74) Vertreter: Kaufmann, Sigfrid

(56) Entgegenhaltungen:
- DE-A- 2 946 219
- DE-A- 3 544 845
- DE-A- 19 704 525
- US-A- 3 616 128

## Beschreibung

Die Erfindung betrifft eine drei- oder höherlagige Verbundplatte entsprechend dem Oberbegriff des Patentanspruches, deren Anwendung sich insbesondere bei hoher Belastung, z. B. als Schalungsplatte, anbietet.

Verbund- und Mehrschichtplatten sind in den verschiedensten Ausführungsformen bekannt und gebräuchlich.

DE 2946219 offenbart eine mehrlagige Verbundplatte mit einer zentralen Pressspanplatte und zweier Aussenlagen aus miteinander seitlich und in einer Ebene verleimten Lamellen.

So beschreibt DE 4026347 ein Verfahren zum Herstellen einer Mehrschicht-Massivholzplatte durch Pressverieimen von mindestens zwei Lagen lamellenartiger Bretter, die durch spanlos schneidendes Zerteilen eines mit erhöhter Temperatur und Feuchte vorgedämpften Kantholzes erzeugt werden. In einer speziellen Anlage wird das Kantholz in Längsrichtung über eine Andruckvorrichtung gegen ein Messer geschoben und dabei durch ein vorgelagertes Gegendruckelement abgestützt. Die abgetrennten Lamellen werden vor der Beleimung einer Trocknung zugeführt. Zum Verfahren ist bekannt, daß das Kantholz beim Schneiden eine Temperatur von mindestens 40°C aufweist (DE 3936312) und in möglichst gleichdicke Lamellen aufgeteilt werden sollte (DE 4026348).

Ein anderes Verfahren zum Herstellen einer aus mehreren Lagen bestehenden Massivholzplatte beschäftigt sich mit dem Manipulieren der Decklagen beim Zusammenlegen und beim Transport von der Leimauftragsmaschine in die Heißpresse unter Verwendung einer Zusammenlegevorrichtung (DE 4016633). Die Decklamellen können dabei mit ihren Sichtflächen übereinander gestapelt und im Block beleimt werden (DE 4010307).

Es ist auch bekannt, im Interesse einer besseren Verleimqualität die Fugen der Lamellen abzuschrägen und mit speziellen komplementären Profilierungen zu versehen, die beim Verleimen ineinander greifen (DE 3544845).

Nach DE 9313274 sind mehrschichtige, kreuzweise verleimte Massivholzplatten für einen Einsatz als Verlegeplatte durch unterschiedlich ausgebildete Kanten (z.B. Nut mit Feder, V-Nut mit V-Feder, Nutung mit loser Feder) gekennzeichnet.

Derart hergestellte 10 bis 50 mm dicke Platten können statische Funktionen im Bauwesen übernehmen.

Weiterhin werden Massivholzplatten hergestellt, deren Lamellen durch Dübel, die über die volle Lamellenbreite reichen, zusammengefügt werden (DE 3840093). Massivholzplatten nach einem anderen Verfahren sind durch mindestens eine, quer zur Faserrichtung liegende Bohrung mit eingeschobenem Stabilisierungstab gekennzeichnet (DE 8816092;EP 0903207 A2).

DE 9201177 beschreibt die Fertigung diagonal verleimter Massivholzplatten. Lamellen beliebiger Länge werden dabei durch Nut- und Federverbindung in einer Spezialverleimpresse so aneinandergeleimt, daß sich die Fläche als abgesetzte diagonale Oberfläche abzeichnet.

Aus G 92 13 183.2 ist eine zweilagige Verbundplatte mit wenigsten einer Deckschicht aus Holz und einer Unterschicht aus Holz oder einem nicht näher bezeichnetem Holzwerkstoff als nichttragendem Werkstoff für einen Einsatz im Fußbodenbereich bekannt. Die Deckschicht besteht aus bahnenförmig verlegten Hirnholzabschnitten mit abwechselnd gegenläufiger, schräg zur Unterschicht verlaufender Hauptfaserrichtung, die eine höhere mechanische Belastungsfähigkeit als herkömmliche längsgeschnittenen Vollholzabschnitte aufweisen. Im Grunde geht es um ein Hirnholz-Fertigparkett (Parkett-Tafeln).DE 39 08 851 A1 beschreibt ein Verfahren zur Herstellung von mehrlagigen Paneelbrettern bevorzugt für Fußböden, bei denen die nach Verklebung einer Mittellage (geschlitztes Vollholz) mit jeweils außenliegenden, gesperrt angeordneten Trittschichten entstandenen brettförmigen Verbundplatten über eine Kreissäge in der Symmetrieachse parallel zur Trittfläche aufgetrennt werden, um so verzugsfreie Paneele zu erhalten. Schließlich wird in DE 41 22 365 A1 ein Verfahren zur Herstellung weitgehend formstabiler dreilagiger Massivholzplatten, deren Decklagen aus geschnittenen Lamellen (spanlos schneidendes Zertrennen) und deren Mittellagen aus nicht geschnittenen Lamellen (gesägte Lamellen) bestehen, vorgestellt.

Drei- oder mehrlagige Platten aus Vollholzlamellen, im weiteren gemäß DIN EN 844-4 als Massivholzplatten bezeichnet, haben in Abhängigkeit von Holzart, Holzqualität, Plattenaufbau, Format und Plattenqualität vielfältige Anwendungsgebiete im Möbelbau, Innenausbau und Bauwesen. Im Innenausbau stieg der Massivholzplattenanteil für die Herstellung von Tür-, Decken-, Wand-, Boden- und Treppenelementen deutlich an.

Im Fertig- und Holzhausbau sowie im Holzständer- und Holzrahmenbau werden sie zunehmend als tragende und aussteifende Elemente eingesetzt. Für einen derartigen Einsatz müssen die elasto-mechanischen Eigenschaften der Platten bekannt sein, um die statischen Nachweise der Standsicherheit und der Gebrauchstauglichkeit führen zu können. Aufgrund der großen Flächenanisotropie der oben beschriebenen Massivholzplatten weichen die Eigenschaften bei Belastung unter 0° bzw. 90° zur Faserrichtung der Decklage deutlich von den Eigenschaften herkömmlicher Holzwerkstoffe ab, was zu einer maßgeblichen Einschränkung der Einsatzmöglichkeiten dieser Platten führt.

Mehrlagige Massivholzplatten bestehen üblicherweise aus zwei gleichgerichteten Decklagen, die mit jeweils um 90° versetzten, oftmals vorgefertigten Mittel- bzw. Innenlagen in Ein- oder Mehretagenpressen mit teilweise zusätzlichen Druckelementen zur horizontalen Verdichtung der Decklagen flächig verklebt werden. Die Platten erhalten durch die Absperrung infolge der um jeweils 90° versetzt angeordneten Mittel- und Innenlagen eine höhere Steifigkeit in Querrichtung und weisen eine verbesserte Formstabilität im Gegensatz zu einlagigen Platten auf. Die Kenntnis über das Formänderungsverhalten von plattenförmigen Holzwerkstoffen unter dem Einfluss wechselnder Klimate bzw. bei Vorliegen plattenseitig unterschiedlicher Klimate ist in den Bereichen von Bedeutung, in denen es auf Maßhaltigkeit (z.B. Möbel- und Innenausbau) bzw. Gebrauchstauglichkeit (Holzbau) ankommt.

Untersuchungen zur Formstabilität vor allem von Spanplatten sind bereits seit den 60er Jahren bekannt; Aussagen zur Formstabilität von MDF und weiteren plattenförmigen Holzwerkstoffen (u.a. OSB, Langspanholz und mehrlagige Massivholzplatten) finden sich jedoch erst vereinzelt in jüngerer Zeit.

Bei der Herstellung der Lamellen für Massivholzplatten wird zwischen spanlosen und spanenden Verfahren unterschieden. Die spanlose Herstellung der Lamellen mittels spezieller Schneidmesser-Maschinen erfolgt im Unterschied zum spanenden Verfahren (z.B. Vielblattsägen, Dünnschnittgatter) nahezu verschnittfrei. Neben der optimalen Holzausnutzung zeichnet sich das Schneidverfahren durch hohe Durchsatzleistungen aus, wodurch der aufgrund des notwendigen Vordämpfens des Holzes höhere Energieaufwand bei der Fertigung ausgeglichen werden kann. Als Nachteile des Verfahrens sind die im Holz durch die Vorspaltung entstehenden Risse und Fehlstellen anzusehen, die bei der maschinellen Weiterbearbeitung (z.B. Fräsen) hervortreten und im Ergebnis zu ungünstigen Oberflächeneigenschaften (z.B. beim Beschichten) führen können. Generell werden durch das Aufschneiden des Holzes in einzelne Lamellen holzeigene Spannungen reduziert. Ein österreichischer Hersteller hat ein abgewandtes Verfahren etabliert: Nach der Herstellung von Leimholzträgern werden diese mittels Blockbandsägen aufgetrennt. Die so entstandenen Querschnitte bilden anschließend die Decklagen der Massivholzplatten.

Das Spektrum der für die Massivholzplattenfertigung eingesetzten Holzarten ist breit gefächert. Nadelholzplatten werden überwiegend aus Fichte, Tanne, Kiefer und Lärche sowie aus Douglasie hergestellt. Bei Laubholzplatten dominiert der Einsatz von Buche und Erle, sowie von Ahorn, Kirsche, Eiche und in jüngerer Zeit Birke.

Im Interesse eines besseren Handlings fertigen Hersteller mehrlagiger Massivholzplatten zum großen Teil die Mittel- bzw. Innenlagen vor. Dabei werden in der Regel Polyvinylacetat- (PVAc-) Dispersionen (z.B. als D2-Qualität) eingesetzt. Eine gute Klima- und damit auch Feuchtebeständigkeit wird mit Melamin-Harnstoff-Formaldehyd-(MUF)-Harzen, Phenol-Harnstoff-Formaldehyd-(PF)-Harzen sowie Isocyanat-Bindemitteln erreicht. Vor allem die Anwendung von PVAc-Dispersionen und MUF-Harzen ist bei der Herstellung mehrlagiger Massivholzplatten verbreitet, wobei ein exaktes Einhalten der Verarbeitungsvorschriften qualitätsgerechte Verklebungen sichert. Neben technologischen Prozessparametern wie Presstemperatur, -druck und -zeit bestimmen Holzart, Holzqualität, Holzfeuchte, Bindemittelart und Auftragsmenge entscheidend die entstehende Verklebungsqualität.

Die oben genannten Verschläge zur Verbesserung der elasto-mechanischen Eigenschaften und der Formstabilität der Platten implizieren grundsätzlich Hilfsmittel und Strukturveränderungen, die die Technologie der Herstellung solcher Platten gegenüber herkömmlichen Massivholzplatten verkomplizieren. Andererseits zeigen Untersuchungen zur Formstabilität von herkömmlichen mehrlagigen Massivholzplatten im Differenzklima, daß abgesperrte, mehrlagige Massivholzplatten im Vergleich mit Spanplatten und OSB eine deutlich geringere Formstabilität aufweisen; ein Einsatz im Bauwesen ist damit vielfach ausgeschlossen.

Zudem schwanken die Kennwerte mehrlagiger Massivholzplatten je nach Hersteller aufgrund des unterschiedlichen Aufbaus (Lamellendicken und -breiten) und des vollholzähnlichen Charakters stark, was zu einer deutlichen Verminderung der Einsatzbreite der Platten führt.

Durch die Gestaltung der Schmalflächen ist die Verbindung herkömmlicher Massivholzplatten in Plattenebene nur durch zusätzlichen technologischen Aufwand und mit Hilfs- und Verbindungsmitteln möglich.

Ziel der Erfindung ist es, eine mehrlagige Verbundplatte vorzuschlagen, die die angeführten Nachteile des Standes der Technik weitgehend beseitigt und kostengünstiger herstellbar ist. Dabei steht die Aufgabe, die elasto-mechanischen Eigenschaften einer solchen Platte bei erhöhter Formstabilität zu verbessern.

Diese Aufgabe wird dadurch gelöst, daß die Außenlagen der erfindungsgemäßen Verbundplatte aus in der Ebene gleichgerichtet angeordneten fugenverklebten Vollholzlamellen und deren Mittel- bzw. Innenlagen aus faser- oder lagenförmigen Holzwerkstoffen bestehen. Bevorzugt werden als faser- oder lagenförmige Holzwerkstoffe, Platten aus langen, ausgerichteten Spänen (OSB), Faserplatten, Sperrholz und Furnierschichtholz verwendet. Das Bindemittel ist dem geplanten Einsatz entsprechend zu wählen. Bei Platten für einen Einsatz im Innenraum erfolgt die Verklebung der Lamellen mit den partikel-, faser- oder lagenförmigen Holzwerkstoffen mit PVAc-Dispersionen oder UF-[Harnstoff-Formaldehyd-] Harzen. Eine entsprechende Verklebungsqualität der Holzwerkstoffe ist gleichfalls ausreichend (z.B. mit UF- [Harnstoff-Formaldehyd-] Harzen für eine Verklebungsqualität V20 gemäß DIN 68 763). Ein Einsatz natürlicher Bindemittel (Stärke, Proteine, Tannine etc.) ist ebenfalls möglich. Die Vorzüge der entwickelten Verbundplatte prädestinieren für eine tragende und aussteifende Anwendung im Bauwesen. Bei erhöhten Anforderungen hinsichtlich der Verklebungsqualität ist sowohl für die Verklebung der Lamellen, die spanend durch Schneiden oder spanlos durch Spalten hergestellt sind und eine dicke größer 3,5 mm und eine Breite größer 25 mm aufweisen, als auch für die Verklebungsqualität der eingesetzten partikel-, faser- oder lagenförmigen Holzwerkstoffe die Verwendung von Bindemittelsystemen mit erhöhter Feuchtebeständigkeit (MUF- [Melamin-Harnstoff-Formaldehyd-], PF- [Phenol-Formaldehyd-], PRF-[Phenol-Resorcin-Formaldehyd-] bzw. PMDI- [Polymerer Diphenylmethan-4,4-diisocyanat-] Bindemittelsysteme) notwendig.

Durch den Einsatz von, faser- oder lagenförmigen Holzwerkstoffen in der Mittel- bzw. den Innenlagen drei- oder mehrlagiger Verbundplatten mit Außenlagen aus Vollholzlamellen kommt es überraschenderweise zu einer Homogenisierung der Platteneigenschaften und, bei Einsatz gesperrter Holzwerkstoffe, zu einer eindeutigen Verbesserung spezieller elasto-mechanischer Eigenschaften, die den erfindungsgemäß hergestellten Werkstoff für einen Einsatz im Bauwesen prädestinieren. Die Vorteile der Vollholzeigenschaften (z.B. hohe elastische Eigenschaften in Faserrichtung) werden mit Vorteilen etablierter Holzwerkstoffe (z.B. quasi stufenlose Einstellung der Plattennenndicken, geringere Flächenanisotropie) verbunden.

Infolge des vorschlagsgemäßen Aufbaus der drei- und mehrlagige Verbundplatten mit Holzwerkstoff-Mittel- bzw. Innenlagen reduzieren sich, in Abhängigkeit vom eingesetzten, faser- oder lagenförmigen Holzwerkstoff, die Formänderungswerte in Differenz- und Wechselklimaten aufgrund des mehrlagigen Aufbaus und der teilweise gesperrten Struktur der Holzwerkstoffe sowie des Aufschlussgrades und des erhöhten Bindemittelanteils im Holzwerkstoff. Aufgrund der besseren Formstabilität eignen sie sich deshalb gleichfalls für einen Einsatz im Möbeluns Innenausbau.

Des weiteren ist mit versetzt angeordneten Mittel- bzw. Innenlagen die Verbindung der Platten in Plattenebene möglich.

Bei der Herstellung der erfindungsgemäßen Verbundplatte kommt es zu einer Einsparung an Lamellenmaterial (abhängig vom Aufbau und der Dicke der Platte) bis zu 70 %, der Vorfertigungsaufwand für die Mittel- bzw. Innenlage entfällt und spürbare technologische Erleichterungen sind zu erwarten, da erstmals - obgleich eigentlich bereits seit langem möglich - die Veränderung der platteninhärenten Materialstruktur ohne Zuhilfenahme äußerer Mittel erreicht wird. Die Erfindung wird nachfolgend anhand von Ausführungsbeispielen näher erläutert. Dazu zeigt
- Figur 1: Eine dreilagige Verbundplatte mit gesperrt orientiertem, nicht versetzt angeordnetem, faser- oder lagenförmigem Holzwerkstoff in der Mittellage 2
- Figur 2: Eine dreilagige Verbundplatte mit gesperrt orientiertem, zur Verbindung der Verbundplatten in Plattenebene versetzt angeordnetem faser- oder lagenförmigem Holzwerkstoff in der Mittellage 2
- Figur 3: Eine fünflagige Verbundplatte mit gesperrt orientiertem, zur Verbindung der Verbundplatten in Plattenebene versetzt angeordneten, faser- oder lagenförmigen Holzwerkstoffen in den Innenlagen 3
- Figur 4: Eine fünflagige Verbundplatte mit gesperrt orientiertem, zur Verbindung der Verbundplatten in Plattenebene versetzt angeordneten faser- oder lagenförmigen Holzwerkstoffen in den Innenlagen 3 und gesperrt angeordneter Mittellage 2.

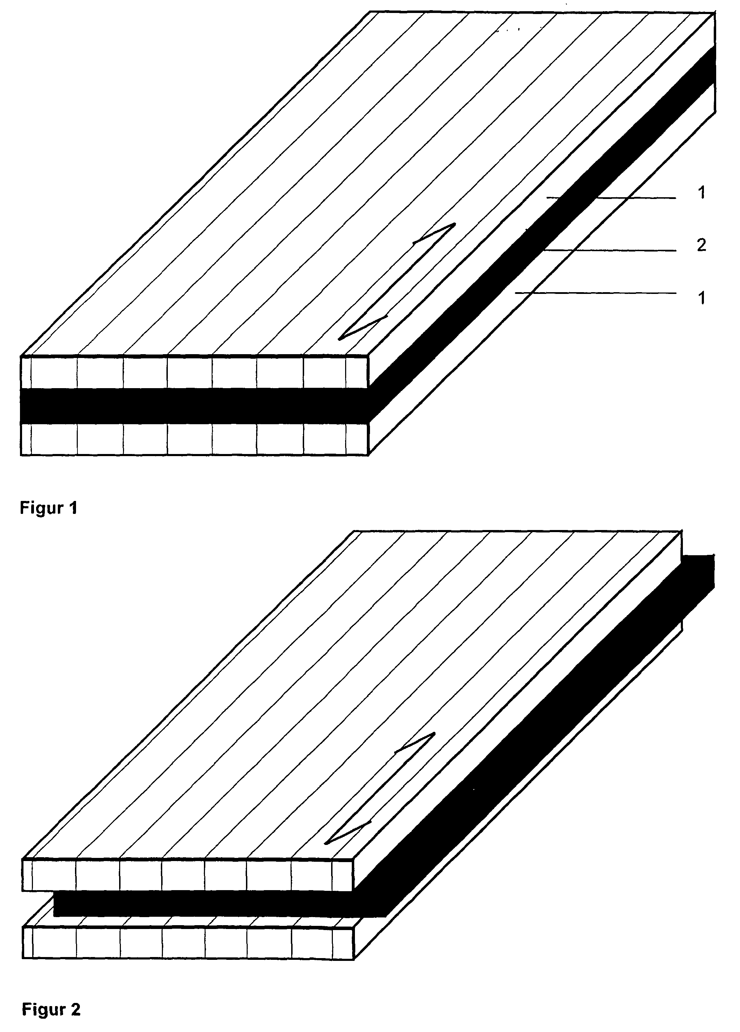

Die zur Verklebung kommenden Lamellen 1 werden vor der Verklebung auf eine Prozessfeuchte von 8 ... 10 ... 30 % (vorzugsweise 10 %) gebracht. Der zu wählende Feuchtegehalt hängt in starkem Maße vom eingesetzten Bindemittelsystem ab. Die Lamellenschmalseiten können je nach Einsatzanforderungen profiliert sein: Trapezförmig, getreppt, Nut-Feder-Profilierung. Je nach technologischen Gegebenheiten ist es möglich, die Lamellen auf der nach innen kommenden Breit- und einer Schmalfläche mit dem verwendeten Bindemittelsystem über Sprüh-, Gieß- oder Walzenauftrag zu beleimen. Es besteht andererseits die Möglichkeit, die zum Einsatz kommenden partikel-, faser- oder lagenförmigen Holzwerkstoffe beidseitig auf deren Breitfläche mit o. g. Verfahren zu beleimen. Allerdings sind dann zusätzliche Maßnahmen zu treffen, um die Fugenverklebung der Lamellen zu sichern. Nach dem Legen der Lamellen, bei dem üblicherweise darauf geachtet wird, daß die kernzugewandte Seite der Lamellen nach außen kommt, erfolgt die Heißverpressung in Ein- oder Mehretagenpressen. Über zusätzlich angeordnete horizontale Druckelemente ist eine Verdichtung der Decklagen und gegebenenfalls gleichorientierter innenliegender Lagen notwendig. Die Pressplatten werden auf vertikalen Kontaktdruck zusammengefahren (ca. 10 - 25 % des spezifischen Flächendrucks). Nach dem vollständigen Aufbau des horizontalen Seitendrucks wird der endgültige spezifische Flächendruck aufgebaut. Die Presstemperatur richtet sich nach dem eingesetzten Bindemittelsystem und den verwendeten Holzarten und liegt im allgemeinen zwischen 50 und 180 °C. Die Presszeit hängt von der Holzfeuchte und der Dicke der zu durchwärmenden Schichten ab. Nach der Verpressung haben Deck- und Mittellagen gleiche Abmessungen in der Ebene der Platte (vgl. Fig. 1).

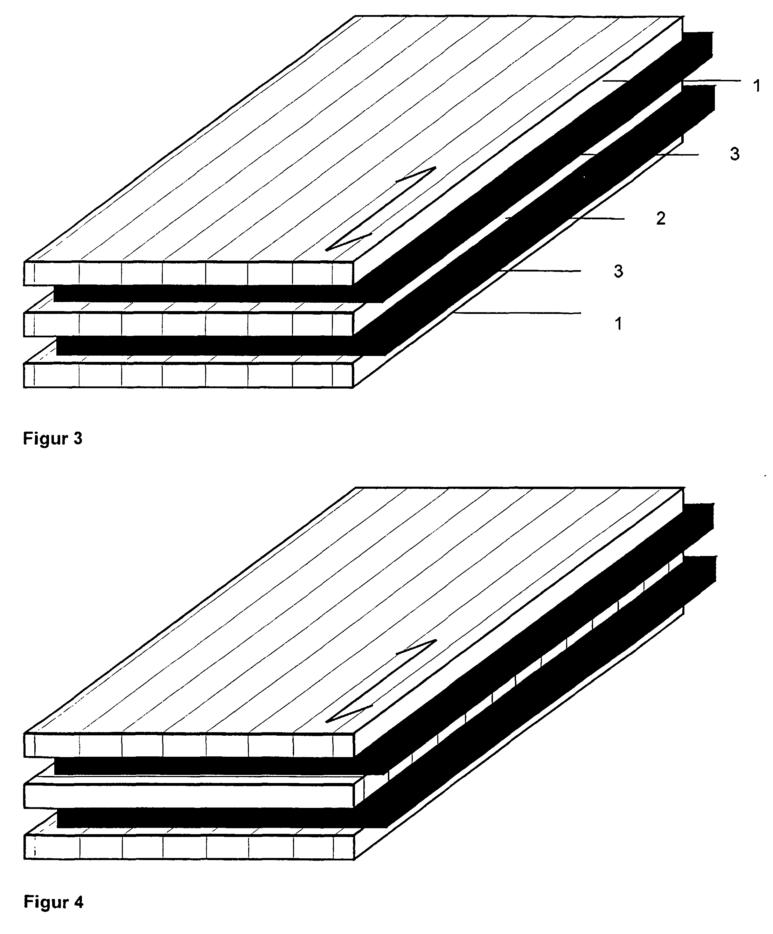

Ist es geplant, die hergestellten Platten im späteren Einsatz in Plattenebene zu verbinden, so ist die versetzte Verlegung der Mittel- bzw. Innenlagen sinnvoll, um eine Nut-Feder-Verbindung auszuprägen (siehe Fig. 2, 3 und 4). Dabei ist zu beachten, daß der Leimauftrag auf den partikel-, faser- oder lagenförmigen Holzwerkstoffen erfolgt und daß die horizontalen Seitendruck- und Gegendruckelemente, der späteren Nut-Feder-Verbindung angepaßt, ausgebildet werden. An den Schmalflächen, an denen der Seitendruck nicht angreift, sind bei der Verpressung entsprechend geformte Beilagen zu verwenden.

Nach der Verpressung sollten die Platten mindestens 1 Woche im abgedeckten Stapel konditionieren (Feuchteausgleich), um Spannungen und Verwerfungen zu vermeiden. Danach kann der Schliff auf Enddicke und der Einschnitt auf spezielle Kundenmaße erfolgen. Die Schmalflächen sind dem späteren Einsatz entsprechend zu bearbeiten (Besäumen, Fräsen). Bei Verpackung und Versand ist auf eine feuchtesichere Umhüllung der Platten zu achten.

Die erreichbare Verbesserung spezieller elasto-mechanischer Eigenschaften der erfindungsgemäßen Verbundplatte ist abhängig von den gewählten Holzwerkstoffen. Die bei Massivholzplatten ohne innenliegende partikel- oder lagenförmige Holzwerkstoffe üblicherweise auftretenden Flächenanisotropien der Eigenschaften können in jedem Fall nachhaltig gesenkt und vergleichmäßigt werden. Durch die Verwendung herkömmlicher und preiswerter, faser- oder lagenförmigen Holzwerkstoffe kommt es, neben einer bis zu 70 %igen Einsparung an Vollholzlamellen (abhängig von Struktur und Aufbau der Platten), gegenüber Platten ohne innenliegende Holzwerkstoffe gleicher Nenndicke zu einer Senkung der Produktionskosten aufgrund eines wesentlich einfacheren Handlings, der Verwendung von preiswerteren Holzwerkstoffen in den Mittel- bzw. innenliegenden Lagen und des Wegfalls des Vorfertigungsaufwandes für die Mittel- bzw. Innenlagen.

Bei versetzter Anordnung der Mittel- bzw. innenliegenden Lagen der erfindungsgemäß hergestellten Werkstoffe ist eine Verbindung der Platten in Plattenebene unproblematisch möglich.

Durch die gesperrte Anordnung von anisotropen, faser- oder lagenförmigen Holzwerkstoffen in den Mittel- und Innenlagen wird die Formstabilität der vorgeschlagenen Verbundplatten gegenüber Platten ohne innenliegende Holzwerkstoffe gleicher Nenndicke deutlich verbessert. Bei versetzter Anordnung der Mittel- bzw. Innenlagen ist die Verbindung der erfindungsgemäßen Verbundplatten in Plattenebene einfach möglich.

## Patentansprüche

1. Mehrlagige Verbundplatte, deren Außenlagen aus gleichsinnig in der Ebene angeordneten, seitlich verklebten, spanend durch Schneiden oder spanlos durch Spalten hergestellten Lamellen (1) aus Massivholz bestehen, und die eine Mittellage (2) und/oder Innenlagen (3) aufweisen, **dadurch gekennzeichnet, daß** die Mittel- (2) und/oder Innenlagen (3) Platten aus langen, ausgerichteten Spänen (OSB), Faserplatten, Sperrhölzer oder Furnierschichthölzer sind.

2. Verbundplatte nach Anspruch 1, **dadurch gekennzeichnet, daß** die Lamellen größer als 3,5 mm dick und größer 25 mm breit sind.

3. Verbundplatte nach Anspruch 1, **dadurch gekennzeichnet, daß** die für die Mittel-(2) und/oder Innenlagen (3) verwendeten Platten aus langen, schlanken, ausgerichteten Spänen (OSB), Faserplatten, Sperrhölzer oder Furnierschichthölzer in Richtung ihre maximalen Zugfestigkeit um 90° versetzt zur Faserrichtung der Außenlagen (1) angeordnet sind.

## Claims

1. Multilayer composite board, whose outer layers comprise solid wooden laminas (1) produced by chip-forming cutting or by chipless cleaving, arranged in the same direction in a plane and glued at the sides, and which possesses a mid-layer (2) and/or inner layers (3), wherein the mid- (2) and/or inner layers (3) are boards of long oriented strands (OSB), fibreboards, plywoods or veneer laminates.

2. Composite board according to Claim 1, wherein the laminas are more than 3.5 mm thick and more than 25 mm wide

3. Composite board according to Claim 1, wherein the boards of long narrow oriented strands (OSB), fibreboards, plywoods or veneer laminates used for the mid- (2) and/or inner layers (3) are arranged at 90° to the fibre direction of the outer layers (1) viewed in the direction of their maximum tensile strength.

## Revendications

1. Panneau composite multicouche constitué de couches extérieures en lamelles (1) de bois massif, qui sont disposées dans le même sens dans un plan, collées latéralement et fabriquées par coupe ou par fendage, d'une couche médiane (2) et/ou de couches intérieures (3), **caractérisé par le fait que** la couche médiane (2) et/ou les couches intérieures (3) sont des panneaux constitués de longs copeaux orientés (OSB), des panneaux de fibres, du contreplaqué ou du bois en placage stratifié.

2. Panneau composite suivant la revendication 1, **caractérisé par le fait que** les lamelles sont plus épaisses que 3,5 mm et plus larges que 25 mm.

3. Panneau composite suivant la revendication 1, **caractérisé par le fait que** les panneaux en longs copeaux étroits orientés (OSB), panneaux de fibres, contreplaqué ou bois en placage stratifié, qui sont utilisés pour la couche médiane (2) et/ou les couches intérieures (3), sont décalés de 90° dans le sens de leur résistance maximale à la traction par rapport à l'orientation des fibres des couches extérieures (1).
